# FASCICULE DE BREVET EUROPEEN

(11) **EP 0 533 586 B1**
(45) Date de publication et mention de la délivrance du brevet: **04.01.1995**
(21) Numéro de dépôt: 92402579.4
(22) Date de dépôt: 18.09.1992
(51) Int. Cl.: F16F 1/42, F16F 1/36

(54) **Dispositif de suspension élastique à raideurs différenciées pour le support d'un équipement**
Elastische Aufhängungsvorrichtung mit verschiedenen Steifheiten zur Lagerung eines Geräts
Elastic suspension device with different directional stiffnesses for equipment support

(30) Priorité: 18.09.1991 FR 9111497
(43) Date de publication de la demande: 24.03.1993
(73) Titulaire: HUTCHINSON, F-75384 Paris Cédex 08 (FR)
(72) Inventeur: Lecour, Pierre, F-94270 Le Kremlin Becetre (FR); Casse, Christian, F-75013 Paris (FR)
(74) Mandataire: Picard, Jean-Claude Georges

(56) Documents cités:
- EP-A- 0 296 974
- EP-A- 0 324 693
- DE-A- 2 262 816
- DE-A- 4 035 780
- FR-A- 2 418 389
- GB-A- 2 049 098
- US-A- 2 594 665

## Description

La présente invention concerne un dispositif de suspension élastique à raideurs différenciées pour le support d'un équipement, à savoir du type présentant selon la direction verticale (z) une raideur relativement importante, pour la reprise de la charge statique dudit équipement, et selon deux directions horizontales (x, y) orthogonales entre elles et à la précédente, des raideurs relativement faibles.

Dans le cas spécifique de l'invention, le dispositif devra maintenir l'équipement avec une certaine flexibilité de suspension pour filtrer les vibrations pouvant nuire à son fonctionnement, ou au contraire filtrer les vibrations que l'équipement peut émettre. En même temps, ce dispositif devra pouvoir encaisser de, chocs importants, au cours desquels la fonction de filtrage vibratoire est sans intérêt. Ces caractéristiques intéressent essentiellement la direction z, c'est-à-dire la direction verticale.

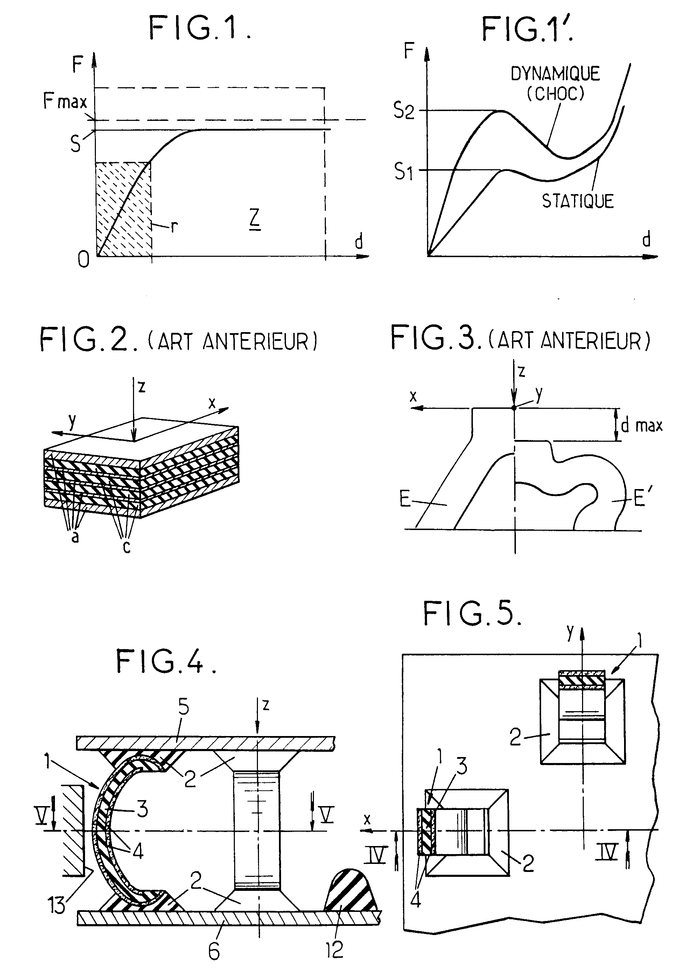

Pratiquement, la raideur verticale en fonctionnement normal doit correspondre à quelques mm de déformation sous la charge statique, de manière à filtrer les vibrations et à obtenir des déplacements modérés lors des variations de charge statique. Par contre, en cas de choc dans cette direction verticale, on demande une limitation d'effort incompatible avec la raideur demandée pour le fonctionnement normal, ce qui conduit à demander un effet de seuil. Cela signifie que lorsque l'effort vertical dépassera un certain seuil, la raideur du dispositif devra diminuer brusquement et devenir instantanément très faible. Cela est illustré par la figure 1 du dessin ci-annexé, qui représente, pour un tel dispositif à seuil, la courbe des efforts verticaux F en fonction de la déformation d. La raideur est normale dans le rectangle r et diminue très rapidement au-delà, pour devenir extrêmement faible au niveau du seuil S, seuil qui se situe légèrement au-dessous de la valeur Fₘₐₓ, représentant l'effort maximum sous choc. (Z représente donc la zone de fonctionnement sous choc).

Quant aux raideurs plus faibles dans les directions horizontales x et y, elles devront s'accompagner de la même capacité de déformation sous choc.

Parmi les dispositifs actuellement connus, à raideurs différenciées, on connaît les dispositifs à plaques en sandwich (voir figure 2), alternativement en caoutchouc c et en acier a, qui permettent d'obtenir une beaucoup plus forte raideur dans la direction z perpendiculaire aux plaques que dans les directions x et y de leur plan, mais bien entendu il ne peut y avoir aucun effet de seuil dans la direction z perpendiculaire aux plaques.

Dans un autre dispositif de type connu (figure 3), on met en oeuvre un effet de flambage pour obtenir l'effet de seuil voulu. Au repos, l'élément élastique E a la forme représentée sur la moitié gauche de la figure et présente une raideur normale (accroissement pratiquement linéaire des déplacements d avec les efforts F). Pour un déplacement dₘₐₓ obtenu sous choc, l'élément flambe comme visible en E′, (moitié droite de la figure), et ne présente plus alors qu'une très faible raideur, d'où l'effet de seuil recherché. Cependant, l'inconvénient de ces dispositifs est de ne pas présenter les faibles raideurs transversales requises dans les directions x et y perpendiculaires à la direction z.

D'autre part, les systèmes à base d'élastomère de ce type présentent, en raison du comportement viscoélastique de ces élastomères, un phénomène de surtension au moment du flambage, comme cela a été représenté sur la figure 1′.

Cette surtension engendre une pointe d'effort S₂ en dynamique, qui d'ailleurs n'est pas appréciée correctement par des essais, soit statiques, soit à faible vitesse d'impact. Ceci rend difficile la prise en compte de ce phénomène au niveau de la conception, et donc aléatoire une prévision de comportement du système.

Cette particularité de comportement présente un autre désavantage : si le seuil d'accélération S₂, qui devra correspondre au maximum transmis au système au cours du choc, n'est que faiblement supérieur (5 fois) à la charge statique nominale, on voit tout de suite que le seuil S₁ peut être très proche de la charge statique nominale, augmentée d'un facteur de charge usuel (par ex. 2). On voit donc apparaître un risque d'instabilité sous la charge usuelle maximale, ou même sous la charge statique nominale. Cette instabilité potentielle se traduit généralement dans la pratique par un fluage important du dispositif.

Le but de l'invention, en obtenant un dispositif présentant les caractéristiques énoncées au début, est donc de remédier à ces lacunes de la technique antérieure.

A cet effet, un dispositif de suspension conforme à l'invention, du type général défini en tête, est essentiellement caractérisé en ce qu'il comporte, entre un support dudit équipement et une embase fixe, un ensemble de bras élastiques propres à supporter la charge avec une raideur relativement grande et à subir un flambage en cas de choc dans la direction verticale z, leur raideur étant alors brusquement diminuée, et en ce qu'il comporte entre les extrémités desdits bras et le support d'une part, ladite embase fixe d'autre part, des articulations souples présentant une faible raideur vis-à-vis des efforts s'exerçant horizontalement sur ledit équipement.

D'autres caractéristiques de l'invention apparaîtront à la lecture des exemples suivants de réalisation, donnés à titre purement indicatif, avec référence aux autres figures du dessin ci-annexé dans lequel :
- la figure 4 est une demi-vue du dispositif en coupe verticale par la ligne IV-IV de la figure 5 (correspondant à la direction horizontale x), le plan de coupe passant par l'axe d'un des bras élastiques ;
- la figure 5 est une vue partielle du dispositif en coupe horizontale par la ligne V-V de la figure 4 ;
- la figure 6 représente en coupe partielle verticale une variante d'articulation souple aux extrémités des bras ;
- la figure 7 est une coupe verticale partielle d'un bras élastique et amortisseur ;
- la figure 8 est une vue semblable à la précédente au niveau de la partie centrale d'un desdits bras ; et
- la figure 9 représente en perspective un autre type d'articulation souple pour les extrémités des bras ; et
- la figure 10 montre schématiquement en coupe la possibilité d'utiliser le dispositif également pour reprendre les efforts en détente.

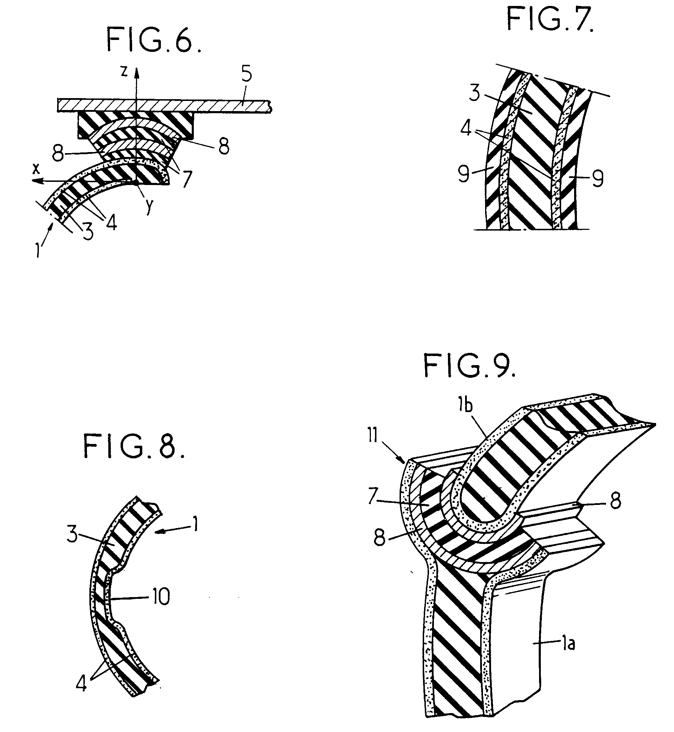

Sur la figure 4, on a référencé 5 le support de l'équipement (non représenté), et en 6 l'embase fixe. Sur toutes les figures, les bras élastiques ont été référencés 1 et les articulations souples prévues entre leurs extrémités et le support 5 d'une part, l'embase 6 d'autre part, ont été référencées 2. Sur les figures 4 et 5 on voit que l'on a prévu, entre le support et l'embase, quatre bras 1 dont les plans axiaux sont situés à 90° l'un de l'autre. Plus généralement on pourrait aussi faire en sorte que ces plans axiaux soient orientés suivant plusieurs directions dans le plan de la figure 5, de façon à obtenir une quasi-isotropie dans ce plan. Chaque bras est courbé vers l'extérieur ou vers l'intérieur de façon à pouvoir flamber facilement en cas de choc vertical, la raideur du système devenant alors très basse, et est constitué, par exemple, par deux lames de matière composite 4 (fibres de verre imprégnées de résine ou analogue), prenant en sandwich une lame de caoutchouc ou d'élastomère 3.

Les articulations souples 2, à faible raideur dans les directions horizontales x et y, sont constituées par des blocs de matière élastique (caoutchouc ou élastomère) adhérisés entre les extrémités arrondies des bras 1 et le support 5 d'une part, l'embase 6 d'autre part. Dans le mode de réalisation des figures 4 et 5, les interfaces entre les extrémités des bras 1 et les articulations souples 2 sont cylindriques. Elles peuvent cependant être sphériques, comme représenté à la figure 6, de sorte qu'elles constituent alors un genre de rotule. Sur cette figure on a montré en outre que les articulations souples 2 peuvent être constituées par un empilage de couches sphériques alternées de caoutchouc 7 et d'acier 8. Grâce à ces rotules on autorise les rotations autour du centre dans les directions x, y et z, sans introduire une trop grande flexibilité dans la direction z de reprise de la charge statique.

Dans la variante de la figure 7, on a représenté la possibilité d'utiliser des bras 1 du même type que celui des figures 4 et 5 mais comportant en outre des couches de caoutchouc ou autre matériau amortisseur extérieures 9, adhérisées au matériau composite 4 et propres à conférer aux bras 1 un meilleur comportement vis-à-vis des fréquences acoustiques, en amortissant les modes propres en flexion des bras. Il est à noter que les couches 9 et 3 peuvent être interverties pour l'obtention du même résultat.

Dans la variante de la figure 8, on a représenté la possibilité de réduire en 10 la section transversale centrale du bras 1, pour favoriser l'apparition du flambage.

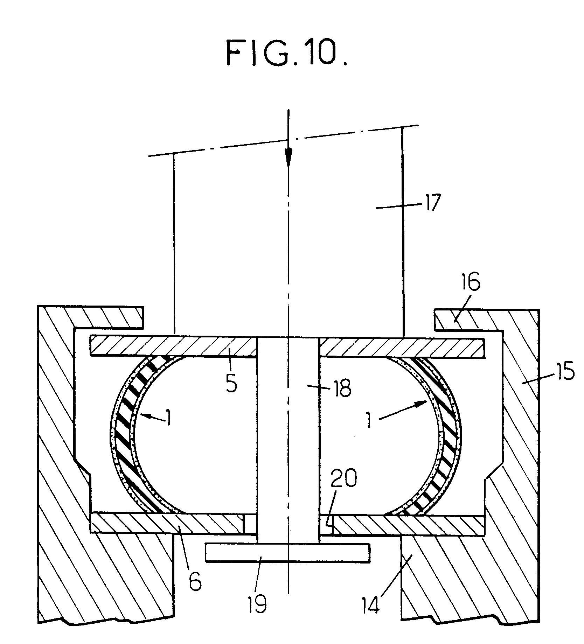

La figure 9 montre aussi la possibilité de réaliser les bras 1 en deux parties 1a et 1b articulées l'une à l'autre par une articulation cylindrique 11 à possibilité de brusque pivotement (autour de l'axe A-A′) en cas de choc vertical. Cette articulation peut être constituée par un lamifié acier 8/caoutchouc 7, comme dans le cas de la variante de la figure 6, l'acier pouvant être le cas échéant remplacé par tout autre métal ou matériau rigide en compression approprié.

En revenant à la figure 4, on a représenté également la possibilité de pourvoir le dispositif d'une butée 12 en élastomère pour limiter le déplacement relatif en direction Z, entre le support 5 et l'embase 6. On peut en outre prévoir, latéralement et des quatre côtés, des faces d'appui 13 pour contrôler ou bloquer transversalement la flexion des bras 1.

La résistance du dispositif vis-à-vis des efforts de détente pourrait simplement résulter de la courbure initiale des bras 1, puisque sous l'effet des efforts de détente ces bras s'ouvriraient. Dans ce cas, aucun effet de flambage ne pourrait être obtenu, sauf avec le montage complété qui a été représenté schématiquement en coupe à la figure 10.

Dans cette figure, on a représenté sous forme simplifiée les bras 1 fixés par leurs extrémités entre des plaques mobiles 5 et 6. Les déplacements de la plaque 6 vers le bas peuvent être limités par l'épaulement 14 d'un étrier de guidage 15 qui, à sa partie supérieure, comporte un rebord de retenue 16. La masse suspendue 17 portée par la plaque supérieure 5, qui normalement est légèrement espacée du rebord de retenue 16, est prolongée vers le bas par un tirant 18 traversant la plaque inférieure 6 et retenu au-dessous de cette dernière par une tête 19 d'un diamètre supérieur à celui du trou 20 par lequel le tirant 18 traverse la plaque 6, là encore un léger espace étant normalement prévu (lorsque les efforts s'exercent vers le bas) entre la tête 19 et la surface inférieure de la plaque 6.

Ceci étant, on voit que, sous l'effet d'une charge statique telle que celle de la masse suspendue 17, les efforts seront transmis de cette masse à la plaque 5, aux bras 1, à la plaque 6 et enfin à l'épaulement 14 de l'étrier 15. En cas de choc vers le bas, bien entendu les bras 1 flamberont, comme dans le cas de la figure 4.

En cas de choc vers le haut tendant à faire remonter la masse suspendue 17, les efforts verticaux ascendants seront transmis à la plaque inférieure 6 par l'intermédiaire du tirant 18 et de sa tête 19, puis aux bras 1 qui fléchiront et transmettront leurs efforts à la plaque supérieure 5, laquelle viendra finalement en butée sur le rebord de retenue 16.

Un mode de réalisation plus simple pourrait encore consister à laisser le système soit libre, étant alors uniquement guidé par des pions coulissants, soit contrôlé par des pièces en élastomère, par exemple cylindro-coniques ou par des plots en traction permettant de maintenir une certaine raideur lors d'un débattement exceptionnel en tension. En régime normal, dans ces deux cas le système serait maintenu en place par son propre poids.

On pourrait aussi imaginer de précontraindre cette dernière liaison en élastomère, si le poids du système suspendu n'était pas suffisant pour couvrir l'ensemble du domaine normal de fonctionnement hors choc.

Pour ce qui concerne finalement le contrôle de l'instabilité, il est à noter que le flambage peut être obtenu en particulier sur des matériaux de type composite qui présentent une viscoélasticité faible et impliquent une plus faible rigidification sous choc. Bien entendu le flambage est par ailleurs obtenu par une géométrie précise des bras 1. En conséquence, l'effet dynamique de flambage est mieux contrôlé que sur des systèmes classiques à base d'élastomères, ce qui élimine pratiquement tous les problèmes d'instabilité auparavant mentionnés.

## Revendications

1. Dispositif de suspension élastique à raideurs différenciées pour le support d'un équipement, à savoir du type présentant selon la direction verticale (z) une raideur relativement importante, pour la reprise de la charge statique dudit équipement, et selon deux directions horizontales (x, y) orthogonales entre elles et à la précédente, des raideurs relativement faibles, caractérisé en ce qu'il comporte, entre un support (5) dudit équipement et une embase fixe (6), un ensemble de bras élastiques (1) propres à supporter la charge avec une raideur relativement grande et à subir un flambage en cas de choc dans la direction verticale (z), leur raideur étant alors brusquement diminuée, et en ce qu'il comporte entre les extrémités desdits bras (1) et le support (5) d'une part, ladite embase fixe (6) d'autre part, des articulations souples (2) présentant une faible raideur vis-à-vis des efforts s'exerçant horizontalement sur ledit équipement.

2. Dispositif selon la revendication 1, caractérisé en ce que lesdits bras (1) sont constitués par des couches alternées de matière élastique (3, 9) éventuellement amortissante, et de matière composite (4) constituée de fibres imprégnées de résine.

3. Dispositif selon la revendication 1 ou 2, caractérisé en ce que lesdits bras (1) sont courbés vers l'extérieur ou vers l'intérieur.

4. Dispositif selon l'une quelconque des revendications précédentes, caractérisé en ce que lesdits bras (1) ont une zone centrale (10) de section réduite.

5. Dispositif selon l'une quelconque des revendications 1 à 3, caractérisé en ce qu'il comporte des bras (1) constitués de deux parties (1a, 1b) articulées l'une à l'autre par une articulation élastique (11) éventuellement lamifiée.

6. Dispositif selon l'une quelconque des revendications précédentes, caractérisé en ce que lesdites articulations souples (2) sont de type cylindrique.

7. Dispositif selon l'une quelconque des revendications 1 à 5, caractérisé en ce que lesdites articulations souples (2) sont de type sphérique.

8. Dispositif selon la revendication 6 ou 7, caractérisé en ce que lesdites articulations souples sont constituées de lamifié caoutchouc (7)/métal (8), ou seulement de caoutchouc, celui-ci étant adhérisé entre bras (1) et support (5) d'une part, embase (6) d'autre part.

9. Dispositif selon l'une quelconque des revendications précédentes, caractérisé en ce qu'il comporte une butée (12) propre à limiter le déplacement relatif l'un vers l'autre du support (5) et de l'embase (6) en cas de choc.

10. Dispositif selon l'une quelconque des revendications précédentes, caractérisé en ce qu'il comporte latéralement des faces d'appui (13) permettant de contrôler ou de bloquer transversalement la flexion des bras (1).

11. Dispositif selon l'une quelconque des revendications précédentes, caractérisé en ce qu'il comporte en tant que support et embase deux plaques mobiles (5, 6) dont les déplacements dans la direction des efforts sont limités dans un sens et dans l'autre, d'une part par l'épaulement (14) d'un étrier (15), d'autre part par un rebord de retenue (16) de cet étrier, ledit équipement (17) étant prolongé par un tirant (18) traversant la plaque inférieure (6) et comportant au-dessous de cette dernière une tête de retenue (19), de sorte que les bras (1) sont soumis également à des efforts de flexion lorsque ledit équipement (17) subit des efforts ascendants.

## Claims

1. Resilient suspension device with differentiated stiffnesses for supporting an item of equipment, namely of the type having a relatively high stiffness in the vertical direction (z), for taking up the static load of the said equipment, and relatively low stiffnesses in two horizontal directions (x, y) at right angles to each other and to the previous one, characterised in that it has, between a support (5) for the said equipment and a fixed base (6), a set of resilient arms (1) able to support the load with a relatively great stiffness and to flex in the event of impact in the vertical direction (z), their stiffness then being abruptly reduced, and in that it has, between the ends of the said arms (1) and the support (5) on the one hand, and the said fixed base (6) on the other hand, flexible links (2) having low stiffness vis-a-vis forces exerted horizontally on the said equipment.

2. Device according to Claim 1, characterised in that the said arms (1) are formed by alternate layers of resilient material (3, 9), which may have damping properties, and composite material (4) consisting of fibres impregnated with resin.

3. Device according to Claim 1 or 2, characterised in that the said arms (1) are curved outwards or inwards.

4. Device according to any one of the preceding claims, characterised in that the said arms (1) have a central region (10) of reduced cross section.

5. Device according to any one of Claims 1 to 3, characterised in that it has arms (1) consisting of two parts (1a, 1b) linked to each other by means of a resilient joint (11), which may be laminated.

6. Device according to any one of the preceding claims, characterised in that the said flexible links (2) are of the cylindrical type.

7. Device according to any one of Claims 1 to 5, characterised in that the said flexible links (2) are of the spherical type.

8. Device according to Claim 6 or 7, characterised in that the said flexible links consist of a rubber (7) / metal (8) lamination, or only rubber, this being bonded between the arm (1) and support (5) on the one hand, and the base (6) on the other hand.

9. Device according to any one of the preceding claims, characterised in that it includes a stop (12) able to limit the relative movement of the support (5) and base (6) towards each other in the event of impact.

10. Device according to any one of the preceding claims, characterised in that it includes, laterally, bearing faces (13) enabling the flexure of the arms (1) to be controlled or arrested transversely.

11. Device according to any one of the preceding claims, characterised in that it includes, as a support and base, two movable plates (5, 6), the movements of which in the direction of the forces are limited in both directions, on the one hand by the shoulder (14) on a brace (15), and on the other hand by a retaining flange (16) on this brace, the said equipment (17) being extended by a tie rod (18) passing through the bottom plate (6) and having, underneath the latter, a retaining head (19), so that the arms (1) are also subjected to bending forces when the said equipment (17) is subjected to upward forces.

## Patentansprüche

1. Elastische Aufhängung zur Abstützung eines Gerätes mit unterschiedlichen Steifigkeiten, die in der senkrechten Richtung (z) eine relativ hohe Steifigkeit für die Aufnahme der statischen Belastung des Gerätes und in zwei horizontalen Richtungen (x, y), die zueinander und zu der vorstehend erwähnten Richtung orthogonal verlaufen, relativ geringe Steifigkeiten aufweist, dadurch gekennzeichnet, daß die Vorrichtung zwischen einer Abstützung (5) des Gerätes und einer festen Fußplatte (6) eine Anordnung von elastischen Armen (1) aufweist, die die Last mit einer verhältnismäßig hohen Steifigkeit abstützen und im Falle des Stoßes in senkrechter Richtung (z) einer Knickung unterliegen können, wobei sich dann ihre Steifigkeit schlagartig verringert, und daß die Vorrichtung zwischen den Enden der Arme (1) und der Abstützung (5) einerseits und der festen Fußplatte (6) andererseits nachgiebige Gelenke (2) enthält, die eine geringe Steifigkeit gegenüber Belastungen aufweisen, die in horizontaler Richtung auf das Gerät einwirken.

2. Elastische Aufhängung nach Anspruch 1, dadurch gekennzeichnet, daß die Arme (1) aus abwechselnden Schichten (3, 9) aus elastischem gegebenenfalls dämpfendem Material und zusammengesetztem Material (4) bestehen, das aus mit Kunstharz imprägnierten Fasern gebildet ist.

3. Elastische Aufhängung nach den Ansprüchen 1 oder 2, dadurch gekennzeichnet, daß die Arme (1) nach außen oder nach innen gebogen sind.

4. Elastische Aufhängung nach einem der vorhergehenden Ansprüche, dadurch gekennzeichnet, daß die Arme (1) eine mittlere Zone (10) mit verringertem Querschnitt aufweisen.

5. Elastische Aufhängung nach einem der vorhergehenden Ansprüche 1 bis 3, dadurch gekennzeichnet, daß sie Arme (1) enthält, die aus zwei Teilen (1a, 1b) bestehen, die gelenkig miteinander durch ein elastisches Gelenk (11), das gegebenenfalls geschichtet ist, verbunden sind.

6. Elastische Aufhängung nach einem der vorhergehenden Ansprüche, dadurch gekennzeichnet, daß die nachgiebigen Gelenke (2) zylindrisch sind.

7. Elastische Aufhängung nach einem der vorhergehenden Ansprüche 1 bis 5, dadurch gekennzeichnet, daß die nachgiebigen Gelenke (2) sphärisch sind.

8. Elastische Aufhängung nach den Ansprüchen 6 und 7, dadurch gekennzeichnet, daß die nachgiebigen Gelenkverbindungen aus
Kautschuk (7)/Metall (8) - Schichten oder nur aus Kautschuk bestehen, der zwischen Armen (1) und Abstützung (5) einerseits und der Fußplatte (6) andererseits angebracht ist.

9. Elastische Aufhängung nach einem der vorhergehenden Ansprüche, dadurch gekennzeichnet, daß sie einen Anschlag (12) enthält, der die relative Verschiebung der Abstützung (5) und der Fußplatte (6) gegeneinander im Falle eines Stoßes begrenzt.

10. Elastische Aufhängung nach einem der vorhergehenden Ansprüche, dadurch gekennzeichnet, daß sie seitlich Stützflächen (13) enthält, die es erlauben, die Biegung der Arme (1) in Querrichtung zu steuern und zu blockieren.

11. Elastische Aufhängung nach einem der vorhergehenden Ansprüche, dadurch gekennzeichnet, daß sie als Abstützung und Fußplatte zwei bewegliche Platten (5, 6) enthält, deren Verschiebungen in Richtung der Belastungen in beiden Richtungen einerseits durch die Schulter (14) eines Bügels (15) und andererseits durch einen Halteanschlag (15) dieses Bügels begrenzt werden, wobei das Gerät (17) durch eine Stange (18) verlängert ist, die die untere Platte (6) durchquert und unterhalb dieser Platte einen Begrenzungskopf (19) enthält, derart, daß die Arme (1) gleichzeitig Biegekräften unterworfen wird, wenn auf das Gerät nach oben gerichtete Belastungen einwirken.
